Europäisches Patentamt

European Patent Office

Office européen des brevets

(19)

(11) Publication number: **0 124 165**
**A2**

# EUROPEAN PATENT APPLICATION

(12)

(21) Application number: 84200558.9

(22) Date of filing: 18.04.84

(51) Int. Cl.³: **A 23 J 1/14,** A 23 J 1/00

(30) Priority: 29.04.83 US 490004

(43) Date of publication of application: 07.11.84
Bulletin 84/45

(84) Designated Contracting States: BE DE FR GB IT NL

(71) Applicant: **THE PROCTER & GAMBLE COMPANY,
301 East Sixth Street, Cincinnati Ohio 45201 (US)**

(72) Inventor: **Dake, Timothy William, 2526 Willowspring
Court, Cincinnati Ohio 45231 (US)**

(74) Representative: **Suslic, Lydia et al, Procter & Gamble
European Technical Center Temselaan 100,
B-1820 Strombeek-Bever (BE)**

(54) Steam stripping an aqueous slurry or solution of protein to remove off-flavors.

(57) A method for removing lipid-oxidation off-flavors from vegetable proteins, especially soy protein used in soy beverages, is disclosed herein. In this method, an aqueous slurry or solution of protein is formed into a film. This film is stripped with steam at a temperature of from about 200° (93°) to about 400 °F (204 °C) to remove off-flavors from the protein. The off-flavor laden steam is then separated from the stripped film. The stripped film is preferably cooled to a temperature of from about 90° (32°) to about 180 °F (82 °C) within about 1 to about 100 seconds after steam stripping begins.This method provides sufficiently bland soy protein without the need of recycling the slurry or solution as in prior methods.

# STEAM STRIPPING AN AQUEOUS SLURRY OR SOLUTION OF PROTEIN TO REMOVE OFF-FLAVORS

Timothy W. Dake

## TECHNICAL FIELD

The present application relates to the removal of lipid-oxidation off-flavors from vegetable protein, in particular soy protein used in beverages.

Two important food products are derived from oleaginous seed materials such as soybeans. One is triglyceride oils extracted or squeezed from the seed material which can be used for cooking, margarine manufacture and the like. The other is nutritionally beneficial protein which is typically used as either a meat extender or total replacement for meat products. In addition, this protein can be used in nutritionally fortified beverages to provide simulated milk products, carbonated soft drinks, fortified fruit juices, liquid meal replacements and enteral products.

To obtain this vegetable protein, the oleaginous seed material is dehulled, flaked and then extracted with a lipid solvent to remove the fat. Between dehulling and extraction, objectionable off-flavors are developed in the protein which are described as "grassy" or "green-beany". These off-flavors can arise from oxidative deterioration of the unsaturated fatty acid esters in the lipids due to enzymatic and nonenzymatic reactions. Oxidation of lipids not removed by the solvent extraction can also generate off-flavors in the protein-bound lipids during subsequent processing and storage. Various carbonyls, in particular n-hexanal, 3-cis-hexenal, and ethyl vinyl ketone, as well as other compounds such as n-pentylfuran and 2-(1-pentenyl)furan, are major contributors to this off-flavor. See Rackis et al., "Flavor Problems of Vegetable Food Proteins," J. Am. Oil Chem. Soc., Vol. 56, (1979), pp. 262-71, which discloses a soy protein concentrate having the blandness of wheat flour prepared by the combination of an azeotropic (alcohol/water) extraction and steaming of soy flakes.

Although these off-flavors can be masked to a certain extent in meat extender or replacement products, their removal is

0124165

- 2 -

necessary in beverage products, such as soy beverages, where the protein needs to be relatively bland in taste. The typical method for removing such off-flavors is disclosed in U.S. Patent 3,642,490 to Hawley et al., issued February 15, 1972. In this method, a slurry of vegetable protein is formed which is heated to a temperature of from about 200° (93°) to 400°F (204°C), preferably from about 285° (140°) to 320°F (160°C). The heated slurry and steam are ejected under pressure into a retention chamber and held for a relatively short time period, normally from about 7 seconds to about 100 seconds. The pressure is then instantaneously released to cause flashing off of a portion of the moisture which is laden with the off-flavor materials. The Hawley et al. patent is representative of a number of patents disclosing the same or a similar method for removing off-flavors from soy protein by flash evaporation. See U.S. Patent 3,642,492 to Arndt, issued February 15, 1972 (same method); U.S. Patent 3,642,493 to Arndt, issued February 15, 1972 (same method); U.S. Patent 3,873,751 to Arndt, issued March 25, 1975 (same method); British Patent Specification 1,302,991 to Hawley et al., published January 10, 1973 (same method); British Patent Specification 1,434,498 to Hawley et al., published May 5, 1976 (same method); U.S. Patent 4,113,716 to Gomi et al., issued September 12, 1982 (similar method); U.S. Patent 4,054,679 to Melcer et al., issued October 18, 1977 (similar method).

During pressure reduction in the above method, the temperature of the protein slurry is quickly and significantly reduced, typically to a temperature of about 140°F (60°C). It is believed that such a temperature drop increases the binding of the carbonyl off-flavors to the protein. See Gremli, "Interaction of Flavor Compounds with Soy Proteins," J. Am. Oil Chem. Soc., Vol. 51, (1974), pp. 95A-97A, which discloses that aldehydes, especially the unsaturated ones, strongly react with soy protein so as to be bound thereto. Off-flavor removal is therefore not as effective as it could be. As a result, a significant level of off-flavors remain which necessitates recycling of the slurry to obtain sufficiently bland protein for soy beverages.

- 3 -

It is therefore an object of the present invention to remove off-flavors from vegetable protein, in particular soy protein used for soy beverages, without the need of recycling.

It is a further object of the present invention to provide a process for removing off-flavors from vegetable protein, in particular soy protein used for soy beverages, which is more effective than that of prior methods.

These and other objects of the present invention are hereinafter disclosed.

## BACKGROUND ART

British Patent Specification 1,585,456 to Kroon et al., published March 4, 1981, discloses a method for preparing a bland soy beverage by heating a suspension of soy flour in water to a temperature of from 70° to 100°C, blowing super-heated steam through the suspension to activate enzymes and trypsin inhibitors present in the flour, and then flashing off the volatiles, including water vapor, from the suspension at reduced pressure.

U.S. Patent 4,022,919 to Comer, issued May 10, 1977 discloses a method for removing the bitter flavor and pea flavor from pea flour. In this method, an aqueous slurry of pea flour and steam are fed to a mixing chamber (jet cooker) where the steam disperses in and heats up the aqueous slurry to a temperature above 100°C, and preferably above 120°C. This steam treatment is generally for a very short time (normally on the order of 1 to 10 seconds) after which the heated slurry leaves the chamber with the pea flavors being carried away with the volatile steam.

U.S. Patent 2,674,609 to Beal et al., issued April 6, 1954 discloses a method for deodorizing glyceride oils. In Example I, refined and bleached soybean oil is introduced into a falling film type column maintained at a temperature of 194°F (90°C)and at a low pressure. Stripping steam is introduced counter-currently to the oil flow to deodorize it. The retention time of the oil in the column is approximately 3 minutes.

U.S. Patent 4,152,465 to Kijima et al., issued May 1, 1979, discloses a method for removing objectionable flavors and odors from texturized soy protein. In this method, the texturized

- 4 -

protein is heated to a temperature of from 80° to 145°C while the moisture content therein is maintained at from 10 to 75% so as to develop green beany flavors and odors characteristic of soybeans. This heated protein is then contacted with a flow of super-heated steam at a temperature of from 105° to 160°C to vaporize water out of the protein and to concurrently remove the developed green beany flavors and odors. See also U.S. Patent 2,776,894 to Kruse, issued January 8, 1957 (passing steam through solvent extracted oil meal); German Patent Document 2,339,908, published March 6, 1975 (steam treatment of a fluidized bed of soybean product to remove bitter principle).

## DISCLOSURE OF THE INVENTION

The present application relates to a method for removing lipid-oxidation off-flavors from vegetable proteins, in particular soy protein. In this method, an aqueous slurry or solution of the protein is provided and then formed into a film. This film is stripped with steam at a temperature of from about 200° (93°) to about 400°F (204°C) to remove the off-flavors from the protein. The off-flavor laden steam is then separated from the stripped film.

The present method provides a more effective way for obtaining bland vegetable protein than prior flash evaporation off-flavor removal methods. For instance, recycling of the slurry or solution is not required to obtain a sufficiently bland soy protein for soy beverages. The efficiency of the present method is believed to be due to the fact that the slurry or solution is stripped with steam at a higher temperature i.e. above about 200°F (93°C), so that binding of off-flavors, primarily the aldehydes, to the protein is decreased. Once unbound, these aldehydes are easily stripped by the steam because of their high relative volatilities. Also, because the slurry or solution is flowed as a film, the off-flavors can be stripped from the protein in a relatively short contact time which decreases the formation of undesirable cooked flavors and minimizes insolubilization of the protein.

A. Vegetable Seed Protein

The method of the present application is useful in removing off-flavors from vegetable proteins derived from a variety of oleaginous seed materials. By "oleaginous seed materials" is meant such oil- and protein-containing seeds such as cottonseeds, soybeans, peanuts, rapeseed, copra, sunflower seeds and the like. The most preferred oleaginous seed material is that of soybean.

After dehulling, the oleaginous seed material is usually flaked or ground and then defatted. Any conventional method of defatting oleaginous seed materials can be used. In most conventional defatting processes, the seed material is first roll-milled or comminuted to form thin flakes or meal. This process exposes a greater surface area and accelerates the defatting process. The flakes or meal are then either pressed to remove the oil and lipid materials, or else extracted with a solvent such as hexane. The solvent is then removed by methods such as air drying to produce low lipid content flakes, meal, or flour.

The defatted seed material is then subjected to a protein separation step. In this step, the water soluble and insoluble protein (plus other water-soluble components such as sugars) is separated from the remaining insoluble portion of the vegetable seeds, primarily the cellular material. The water soluble protein is then made insoluble so that the remaining soluble components of the vegetable seed can be separated therefrom. After this separation step, a slurry or solution of vegetable protein isolate is obtained which can be deflavored in the method of the present invention.

A specific procedure for obtaining soy protein isolate is as follows: Defatted soybean flakes are extracted with water at a pH of from about 6.0 to about 9.0 and a temperature of from about 120° (49°) to about 150°F (66°C). About 9 parts water to 1 part defatted flakes is used. The aqueous extract containing both soluble and insoluble protein, plus other water soluble components, is separated from the remaining insoluble material in the flakes by either centrifugation or filtration. The pH of the extract containing the protein and other water soluble components is adjusted to the isoelectric point of the protein, usually about 4.5. Any food grade acid such as HCl, phosphoric, citric, malic, etc. can be used for pH adjustment. This pH adjustment to the isoelectric point causes a major portion of the protein to become insoluble. This insoluble protein can then be separated from the remaining water soluble components by filtration or centrifugation. This separated protein is mixed with additional water to form a slurry of from about 1 to about 10% by weight soy protein and is then adjusted to a pH of from about 6.0 to about 9.0 by using NaOH, KOH, etc. This slurry can then be deflavored according to the method of the present invention.

Protein isolates for deflavoring can be obtained other than by the procedure previously described. For example, the protein isolate can be obtained through alcohol extraction or ultrafiltration. Protein isolates are preferred in soy beverages due to their high solubility. However, protein materials other than protein isolates can be deflavored in the method of the present invention. Examples include protein concentrates or defatted or nondefatted protein flakes or meal, or aqueous extracts of these protein materials. See Smith & Circle Soybeans: Chemistry and Technology, Vol. 1 (AVI Publishing Company 1978), pp. 294-334 (herein incorporated by reference), for the preparation of soy flours, protein concentrates and protein isolates which can be deflavored by the method of the present invention.

B. Steam Stripping to Remove Lipid Oxidation Off-Flavors

In the method of the present invention, the vegetable protein is formed into an aqueous slurry or solution. As used herein, the term "slurry" refers to an aqueous system wherein the protein is wholly or partly insoluble, but dispersible, in water. As used herein, the term "solution" refers to an aqueous system wherein the protein is completely soluble in water. While reference hereafter is made to aqueous slurries of protein, it is to be understood that aqueous solutions of protein are included as well in the following description.

The amount of protein in the slurry can vary depending upon the economics and efficiency desired in the process. Usually, the slurry contains from about 1 to about 10% by weight protein. Preferably, the slurry contains from about 1% to about 7% by weight protein. Generally, the less protein there is in the slurry, the easier it is to remove the off-flavors therefrom. The pH of the slurry should also be adjusted to prevent precipitation of the protein therefrom. For soy protein, the pH can range from about 6.0 to about 9.0, and preferably from about 6.5 to about 8.5. It can be desirable to preheat the slurry prior to steam stripping to avoid excessive dilution due to condensed steam. Usually, the slurry is preheated to a temperature of from about 50° (10°) to about 200°F (93°C). Preferably, the slurry is preheated to a temperature of from about 120° (49°) to about 150°F (66°C).

The aqueous slurry of protein is formed into a film. The slurry can be formed into the film by a variety of techniques. Usually, the slurry is ejected onto the inside wall of a cylindrical column in order to form the film. The slurry can be ejected by using a hollow cone spray. However, such a spray can result in entrapment of some of the slurry in the stripping steam. Preferably, a nozzle is used having orifices to eject streams of the slurry onto the column which subsequently form the film. Other devices for forming the film can be used well. One example is a circular tube slightly smaller in diameter than that of the column provided with holes for ejecting the slurry.

The film of slurry formed on the inside wall of the column is quite thin. Generally, the thinner the film, the more effective is the off-flavor removal during steam stripping. Usually, the film has a thickness of about 5 mm or less. Preferably, the film has a thickness of about 2 mm or less with a typical thickness range of from about 0.1 to about 2 mm. The thickness of the film can be varied by adjusting the flow rate of the slurry, the viscosity of the slurry and/or the diameter of the column. The viscosity of the slurry is usually dependent upon the amount of protein therein, the other components in the slurry, and the temperature of the slurry.

The thickness of the slurry film can be calculated according to the equation:

$$b = A \bullet \left(\frac{\mu^2}{g\rho^2}\right)^{1/3} \bullet (Re)^X$$

wherein b is the film thickness (mm); $\mu$ is the liquid viscosity (g/cm-sec.); g is a gravitational constant of 980 cm/sec$^2$; $\rho$ is the liquid density (g/cm$^3$); Re is the Reynolds number = 4 $\Gamma$/u; and $\Gamma$ is the liquid flow rate per unit circumferences of the column (g/cm-sec.). A and x are constants which depend on the Reynolds number, Re. For Re less than about 1800, A = 9.09 and x = 1/3 can be used to estimate the film thickness. For Re greater than 1800, A = 1.41 and x = 7/12 can be used to estimate the film thickness. See Perry, et al., Chemical Engineers Handbook, (5th ed. 1973), pp. 5-57 and 14-5; and Zhivaikin, "Liquid Film Thickness in Film-type Units," International Chemical Engineering, Vol. 2, No. 3, (1962), pp. 337-41.

The film of slurry is stripped with steam to remove the off-flavors from the protein. The steam used for stripping preferably flows counter-currently to the flow of the film. The mass flow rate of the steam is usually about 0.01 to about 2 times that of the mass flow rate of the film. Preferably, the steam flow rate is from about 0.05 to about 0.5 times that of the film flow rate.

The film is stripped with steam at a temperature of from about 200° (93°) to about 400°F (204°C). The film is usually heated to this temperature as a result of partial condensation of the steam onto the protein slurry. This temperature range has been found sufficient to decrease binding of the off-flavor carbonyls, and particularly the aldehydes such as hexanal, without excessively cooking the protein. Because of their high relative volatilities, these off-flavor carbonyls readily diffuse across the film-steam interface and into the steam. Thus, the rate limiting factor in this steam stripping step is the unbinding of the carbonyl off-flavors from the protein. Preferred temperatures during this steam stripping step can range from about 275° (135°) to about 325°F (163°C).

After steam stripping, the off-flavor laden steam is separated from the stripped film. Typically, separation occurs as a result of the off-flavor laden steam rising upward, and the stripped film moving downward in the column. The downwardly moving stripped film usually collects at the bottom of the column. Because of the high temperature of the slurry at this point, undesirable cooked flavors can form unless the slurry is cooled down relatively quickly. Usually, the slurry is cooled to a temperature of from about 90° (32°) to about 180°F (82°C), and preferably to a temperature of from about 100° (38°) to about 150°F (66°C). Typically, the stripped slurry is cooled in a flash chamber due to pressure reduction as in prior off-flavor removal methods. However, cooling can also be achieved with a conventional heat exchanger such as a plate and frame, shell and tube, or scraped wall heat exchanger.

The average time to which the stripped slurry is subjected to such high temperatures is also desirably minimized. Usually, this time period is from about 1 to about 100 seconds. Preferably this time period is from about 5 to about 50 seconds. This time period is calculated from the point at which steam stripping of the film begins (usually when the film is formed), to the point at which the stripped slurry is cooled to the previously defined temperature of from about 90° (32°) to about 180°F (82°C).

The protein obtained by this method is relatively bland in flavor. As such, recycling of the slurry for further deflavoring is not necessary. Also, the short time to which the protein is subjected to high temperatures minimizes further insolubilization of the protein. Because the protein obtained is relatively bland in flavor and highly soluble or dispersible in water, it is quite suitable for soy beverages.

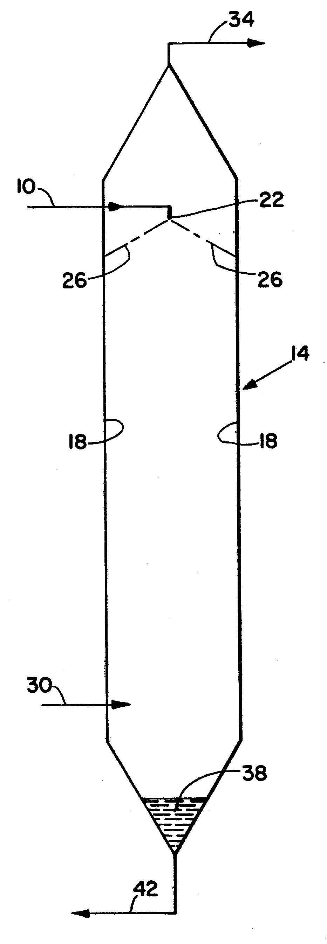

## BRIEF DESCRIPTION OF THE DRAWING
## AND EMBODIMENT OF PRESENT METHOD

The Figure shows a side sectional view of a specific embodiment of the present method.

In this embodiment, a 6% by weight soy protein isolate slurry having a pH of 7 was prepared by mixing Supro 710 soy isolate (made by Ralston Purina Co.) in water and homogenizing this mixture with a piston homogenizer (Gaulin Model M-3) at 8000 psi. The slurry indicated by arrow 10 was fed to the top of cylindrical column 14. This column had a length of 2.1 m and a diameter of 12.7 cm. The slurry was ejected onto the inside surface 18 of the column by nozzle 22. This nozzle had eight jets evenly spaced around the circumference thereof. These jets of nozzle 22 ejected streams of slurry 26 at a flow rate of 30 g/sec onto surface 18 so as to form a film having a calculated thickness of about 0.3 mm. This film flowed downwardly along surface 18 of the column.

Steam was injected into the bottom of the column as indicated by arrow 30 at a pressure of 52 psig. This steam had a temperature of 300°F (149°C) and passed upwardly counter-currently to the slurry film on surface 18 at a flow rate of about 0.22 times that of the film flow rate. The steam stripped the film and then passed out the top of the column as indicated at 34 with the off-flavors, primarily the aldehydes.

The downwardly moving stripped film was collected at the bottom of the column as indicated at 38. The collected stripped slurry was then passed through a heat exchanger as indicated by arrow 42 where it was cooled to a temperature of about 100°F (38°C). The average time from the point at which the slurry was ejected from nozzle 22 until it reached the heat exchanger was about 10 seconds.

The reduction of off-flavors by this embodiment of the present method was determined by measuring the amount of hexanal remaining in the headspace of the protein slurry (before and after stripping) according to the following procedure:

A Hewlett-Packard 5830A series gas chromatograph equipped with temperature programming and a hydrogen flame ionization detector was used together with a Hewlett-Packard 18850A GC terminal. A 500 ft. long, 0.03 inch diameter glass capillary column coated with a thin layer of Carbowax 20M was also used.

The column was heated in an oven where temperature can be controlled and increased according to a specified pattern by the temperature programmer. The hydrogen flame ionization detector was attached to the outlet port of the column. The signal generated by the detector was amplified by an electrometer into a working input signal for the data system and recorder. The recorder printed out the gas chromatograph curve and the data system electronically integrated the area under the curve. The following instrument conditions were used with the gas chromatograph:

| | |
|---|---|
| Injector temperature | 150°C |
| Detector temperature | 220°C |
| Carrier gas ($N_2$) | 10 ml./min. |
| Hydrogen | 30 ml./min. |
| Air | 240 ml./min. |

25 g. of the slurry was placed in a 100 ml. glass bottle and stoppered with a Teflon cap vented to the atmosphere to avoid pressure build up when heated. The bottle and contents were heated in a water bath at 50°C for 30 minutes. A 2 cc. portion of the headspace in the bottle was withdrawn using a heated (50°C) gas tight syringe and injected into the sample port of the gas chromatograph. The components in the sample port were warmed up to a temperature of 150°C and swept by a nitrogen carrier gas to push the components into the column. The column temperature was initially set at 70°C. The column was then heated at a rate of 0.01°C/min. for 30 minutes.

By taking a ratio of hexanal peak areas before and after stripping, the percentage of hexanal remaining in the slurry after stripping was obtained. For the previously described embodiment of the present method, 7.4% hexanal remained in the slurry after steam stripping. For prior flash evaporation processes, typically 20 to 25% of the hexanal remains in the slurry unless it is re-cycled.

0124165

CLAIMS

1. A method for removing lipid oxidation off-flavors from vegetable protein, which comprises the steps of:

    (a) providing an aqueous slurry or solution of vegetable protein;

    (b) forming the slurry or solution into a film;

    (c) stripping the film with steam at a temperature of from about 200° (93°C) to about 400°F (204°C) to remove off-flavors from the protein; and

    (d) separating the off-flavor laden steam from the stripped film.

2. A method according to Claim 1 wherein the protein is soy protein

3. A method according to Claim 2 wherein the steam is flowed counter-currently to the film during step (c).

4. A method according to Claim 3 wherein the stripped film is cooled to a temperature of from about 90° (32°) to about 180°F (82°C) in from about 1 to about 100 seconds after said steam stripping of the film in step (c) begins.

5. A method according to Claim 4 wherein the temperature during step (c) is from about 275° (135°) to about 325°F (163°C).

6. A method according to Claim 5 wherein the steam has a mass flow rate of from about 0.01 to about 2 times that of the mass flow rate of the film.

7. A method according to Claim 6 wherein the steam has a mass flow rate of from about 0.05 to about 0.5 times that of the mass flow rate of the film.

8. A method according to Claim 6 wherein the slurry or solution comprises from about 1 to about 10% by weight soy protein.

9. A method according to Claim 8 wherein the slurry or solution has a pH of from about 6.0 to about 9.0 and comprises from about 1 to about 7% by weight soy protein.

10. A method according to Claim 8 wherein the film has a thickness of about 5 mm or less.

11. A method according to Claim 10 wherein the slurry is preheated to a temperature of from about 50° (10°) to about 200°F (93°C) prior to step (c).

12. A method for removing lipid oxidation off-flavors from soy protein, which comprises the steps of:

  (a) providing an aqueous slurry having a pH of from about 6.5 to about 8.5 which comprises of from about 1 to about 7% by weight soy protein;

  (b) forming the slurry into a film having a thickness of about 2 mm or less;

  (c) counter-currently stripping the film with steam at a mass flow rate of from about 0.05 to about 0.5 times that of the film mass flow rate and at a temperature of from about 275° (135°) to about 325°F (163°C) to remove off-flavors from the protein; and

  (d) separating the off-flavor laden steam from the stripped film.

13. A method according to Claim 12 wherein the stripped film is cooled to a temperature of from about 100° (38°) to about 150°F (66°C) in from about 5 to about 50 seconds after said steam stripping of the film in step (c) begins.

14. A method according to Claim 13 wherein the slurry is preheated to a temperature of from about 120° (49°) to about 150°F (66°C) prior to step (c).

15.  A method according to Claim 14 wherein the soy protein is a soy protein isolate.